# EUROPÄISCHE PATENTSCHRIFT

(11) **EP 3 887 650 B1**
(45) Veröffentlichungstag und Bekanntmachung des Hinweises auf die Patenterteilung: **03.12.2025**
(21) Anmeldenummer: 20713207.7
(22) Anmeldetag: 12.03.2020
(51) Int. Cl.: E21D 9/00, G01L 1/22, G01L 5/00

(54) **SCHNEIDROLLENLAGERTEIL, SCHNEIDROLLENHALTERUNG MIT SCHNEIDROLLENLAGERTEIL, SCHNEIDRAD MIT SCHNEIDROLLENHALTERUNG UND TUNNELVORTRIEBSMASCHINE MIT SCHNEIDRAD**
CUTTING ROLLER BEARING PART, CUTTING ROLLER HOLDER WITH CUTTING ROLLER BEARING PART, CUTTING WHEEL WITH CUTTING ROLLER HOLDER AND TUNNEL BORING MACHINE WITH CUTTING WHEEL
ÉLÉMENT DE PALIER À ROULEAUX DE COUPE, SUPPORT DE ROULEAU DE COUPE POURVU D'UN ÉLÉMENT DE PALIER À ROULEAUX DE COUPE, ROUE DE COUPE POURVUE D'UN SUPPORT DE ROULEAU DE COUPE ET TUNNELIER POURVU D'UNE ROUE DE COUPE

(30) Priorität: 28.03.2019 DE 102019108002
(43) Veröffentlichungstag der Anmeldung: 06.10.2021
(73) Patentinhaber: HERRENKNECHT AKTIENGESELLSCHAFT, 77963 Schwanau (DE)
(72) Erfinder: HIMMELSBACH, Christian, 77963 Schwanau (DE); COUSSEAU, Frédéric, 67115 Plobsheim (FR); BRANDT, Jens, 79189 Bad Krozingen (DE)
(74) Vertreter: RACKETTE Patentanwälte PartG mbB
(86) Internationale Anmeldenummer: PCT/EP2020/056703
(87) Internationale Veröffentlichungsnummer: WO 2020/193164

(56) Entgegenhaltungen:
- CN-U- 203 772 472
- DE-B3- 102011 114 830
- US-A1- 2009 297 273

## Beschreibung

Die Erfindung betrifft eine Schneidrollenlagerteil gemäß dem Oberbegriff des Anspruchs 1.

Die Erfindung betrifft weiterhin eine Schneidrollenhalterung mit einem derartigen Schneidrollenlagerteil.

Die Erfindung betrifft weiterhin ein Schneidrad mit einer derartigen Schneidrollenhalterung.

Die Erfindung betrifft weiterhin eine Tunnelvortriebsmaschine mit einem derartigen Schneidrad.

Ein derartiges Schneidrollenlagerteil ist aus DE 10 2011 114 830 B3 bekannt, welches für eine Schneidrollenhalterung für ein Schneidrad einer Tunnelvortriebsmaschine vorgesehen ist. Dieses vorbekannte Schneidrollenlagerteil verfügt über eine Lastmesseinheit und über eine Aufnahmeraumanordnung, die zur Aufnahme der Lastmesseinheit eingerichtet ist.

Ein weiteres Schneidrollenlagerteil ist aus DE 10 2014 105 014 A1 bekannt, die auch eine zugehörige Schneidrollenhalterung, ein zugehöriges Schneidrad und eine zugehörige Tunnelvortriebsmaschine offenbart. Dieses vorbekannte Schneidrollenlagerteil für eine Schneidrollenhalterung für ein Schneidrad einer Tunnelvortriebsmaschine ist mit einer Anzahl von Lastmesseinheiten und mit einer Aufnahmeraumanordnung ausgestattet, in der die Lastmesseinheiten angeordnet sind. Bei diesem Schneidrollenlagerteil sind die Lastmesseinheiten als Hülsen mit mindestens einem daran angebrachten lastsensitiven Element ausgebildet, wobei die Hülsen in in zumindest radialer Richtung formschlüssigen Hülsenaufnahmelöchern der Aufnahmeraumanordnung angeordnet sind. Die an den Hülsen angebrachten lastsensitiven Elemente sind über aus dem Schneidrollenlagerteil herausgeführte Sensorleitung an eine externe Auswerteeinheit angeschlossen, mit der die von den lastsensitiven Elementen abgegebenen Signale insbesondere zum Bestimmen der auf das Schneidrollenlagerteil einwirkenden Belastungen weiterverarbeitbar sind.

Der Erfindung liegt die Aufgabe zugrunde, ein Schneidrollenlagerteil der eingangs genannten Art sowie eine zugehörige Schneidrollenhalterung, ein zugehöriges Schneidrad und eine zugehörige Tunnelvortriebsmaschine anzugeben, mit dem sich auf das Schneidrollenlagerteil einwirkenden Belastungen verhältnismäßig genau und langzeitstabil bestimmen lassen.

Diese Aufgabe wird bei einem Schneidrollenlagerteil der eingangs genannten Art erfindungsgemäß mit den kennzeichnenden Merkmalen des Anspruchs 1 gelöst.

Diese Aufgabe wird bei einer Schneidrollenhalterung gemäß Anspruch 8 durch Ausstatten mit wenigstens einem erfindungsgemäßen Schneidrollenlagerteil gelöst.

Diese Aufgabe wird bei einem Schneidrad gemäß Anspruch 10 durch Ausstatten mit wenigstens einer erfindungsgemäßen Schneidrollenhalterung gelöst.

Diese Aufgabe wird bei einer Tunnelvortriebsmaschine gemäß Anspruch 11 durch Ausstatten mit einem erfindungsgemäßen Schneidrad gelöst.

Dadurch, dass bei dem erfindungsgemäßen Schneidrollenlagerteil die oder jede Lastmesseinheit als Lastsensor eine Dehnungsmessstreifenanordnung aufweist, die an dem Boden eines speziell ausgerichteten Sensoraufnahmeraums der Aufnahmeanordnung angeordnet ist, und dass die Signalaufbereitungselektronik hermetisch gekapselt in einem mit dem oder jedem Sensoraufnahmeraum verbundenen Bereich der Aufnahmeraumanordnung angeordnet ist, ist die oder jede Lastmesseinheit und die Signalaufbereitungselektronik gegenüber der Außenatmosphäre hermetisch, insbesondere im Sinne von gas-, dampf- und wasserdicht, abgeschlossen sowie direkt miteinander verbindbar. Dadurch ergibt sich bei einer ausreichenden Empfindlichkeit eine hohe Reproduzierbarkeit sowie eine hohe Dauerbeständigkeit bei dem Messen von auf das Schneidrollenlagerteil einwirkenden Belastungen, was verlässliche Rückschlüsse auf die auf eine Schneidrolle einwirkenden Belastungen zulässt, die von einer das erfindungsgemäße Schneidrollenlagerteil aufweisenden Schneidrollenhalterung gehalten ist.

Weitere zweckmäßige Ausgestaltungen der Erfindung sind Gegenstand der abhängigen Ansprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer Stirnansicht eine beispielhafte Ausführung eines Schneidrads einer Tunnelvortriebsmaschine, das mit einer Anzahl von Schneidrollenanordnungen ausgestattet ist,
- Fig. 2: in einer perspektivischen Ansicht eine beispielhafte Ausführung einer an dem Schneidrad gemäß Fig. 1 randseitig verbauten Schneidrollenanordnung,
- Fig. 3: in einer perspektivischen Ansicht die beispielhafte Ausführung einer Schneidrollenanordnung mit einer eine Schneid- rolle haltenden Schneidrollenhalterung, die über ein äußeres Schneidrollengehäuse verfügt,
- Fig. 4: in einer perspektivischen Ansicht die Schneidrolle mit Schneidrollenhalterung gemäß Fig. 3 ohne das Schneidrollengehäuse,
- Fig. 5: in einer perspektivischen Ansicht ein Ausführungsbeispiel eines mit einem Anschlusskabel ausgestatteten Schneidrollenlagerteils gemäß der Erfindung, wie es insbesondere bei einer Schneidrollenhalterung gemäß Fig. 2 bis Fig. 4 zweckmäßigerweise zum Einsatz kommt,
- Fig. 6: in einer Schnittansicht das Ausführungsbeispiel eines Schneidrollenlagerteils gemäß Fig. 5 in einer gestuften ersten Schnittebene,
- Fig. 7: in einer Schnittansicht das Ausführungsbeispiel eines Schneidrollenlagerteils gemäß Fig. 5 in einer weiteren Schnittebene,
- Fig. 8: in einer Schnittansicht entsprechend Fig. 6 ein weiteres Ausführungsbeispiel eines Schneidrollenlagerteils, das mit einer induktiven Auskopplung ausgestattet ist, und
- Fig. 9: in einer Schnittansicht ein Ausführungsbeispiel einer Schneidrollenhalterung mit einem Schneidrollenlagerteil, das mit einer induktiven Auskopplung ausgestattet ist.

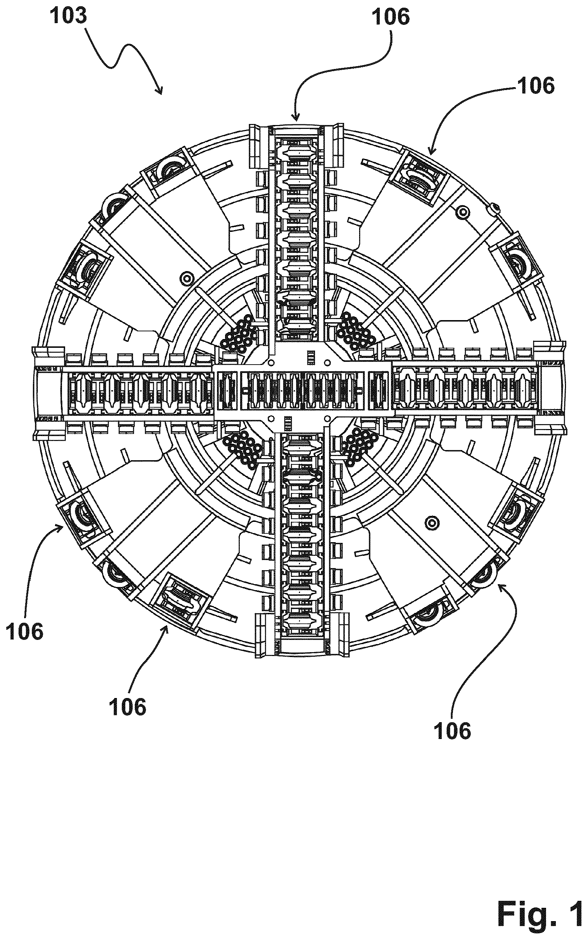

Fig. 1 zeigt in einer Stirnansicht ein Ausführungsbeispiel ein Schneidrad 103 einer in Fig. 1 nicht dargestellten Tunnelvortriebsmaschine, das in einer kreuzartigen Anordnung und entlang des Umfangs randseitig eine Anzahl von Schneidrollenanordnungen 106 aufweist. Die Schneidrollenanordnungen 106 dienen dem Abbau von in Vortriebsrichtung der Tunnelvortriebsmaschine an dem Schneidrad 103 an der Ortsbrust anstehendem Material.

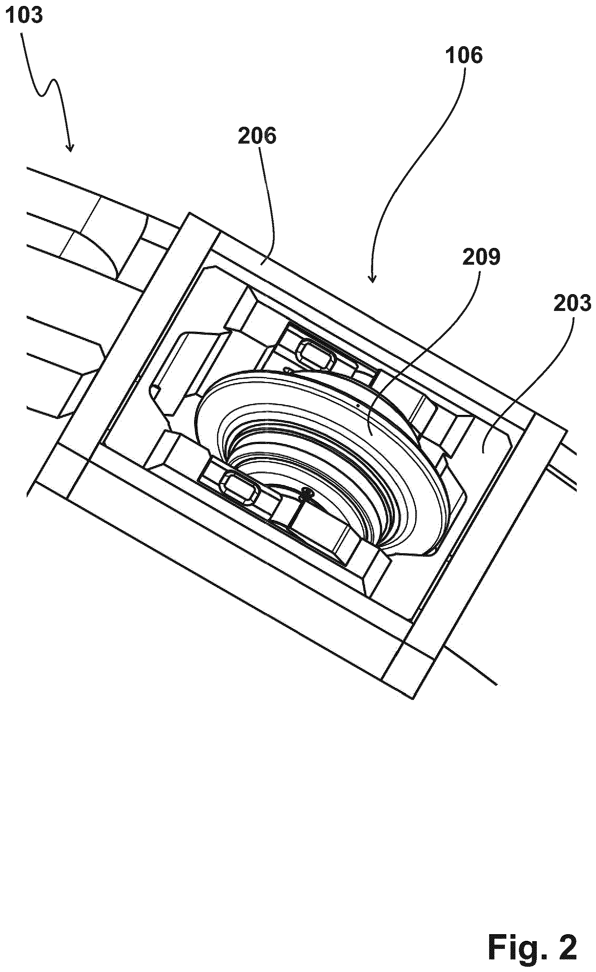

Fig. 2 zeigt in einer perspektivischen Ansicht eine beispielhafte Ausführung einer an dem Schneidrad 103 randseitig, in der Darstellung gemäß Fig. 1 im oberen rechten Quadranten, angeordneten Schneidrollenanordnung 106. Die Schneidrollenanordnung 106 verfügt über eine Schneidrollenhalterung mit einem Schneidrollengehäuse 203, das in einem Schneidrollenkasten 206 des Schneidrads 103 verbaut ist. Das Schneidrollengehäuse 203 umgibt eine Schneidrolle 209, die in der in der Darstellung gemäß Fig. 2 in Richtung des Betrachters weisenden Vortriebsrichtung über das Schneidrollengehäuse 203 und über den Schneidrollenkasten 206 vorsteht.

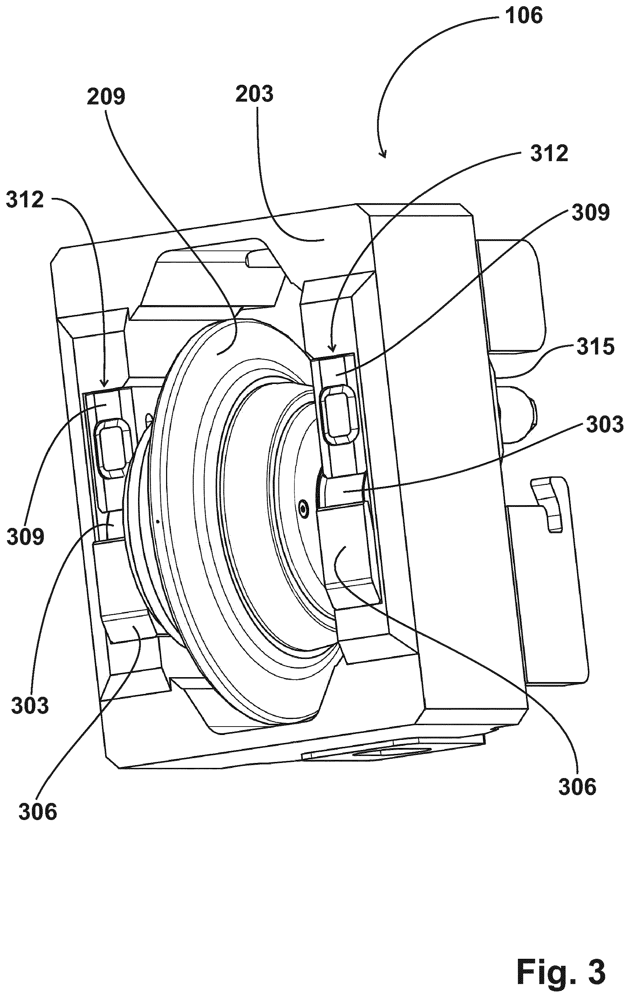

Fig. 3 zeigt in einer perspektivischen Ansicht die beispielhafte Ausführung eines eine Schneidrolle 209 haltenden Schneidrollengehäuse 203 der Schneidrollenhalterung gemäß Fig. 2. Zum Halten der Schneidrolle 209 an Endabschnitten 303 einer Schneidrollenachse sind für jeden Endabschnitt 303 jeweils ein aus Metall hergestelltes C-Stück 306 als Schneidrollenlagerteil und auf der dem C-Stück 306 gegenüberliegenden Seite ein Keillagerstück 309 vorhanden, zwischen denen der jeweilige Endabschnitt 303 der Schneidrollenachse angeordnet und drehfest befestigt ist. Die C-Stücke 306 und die Keillagerstücke 309 sind in randseitig in dem Schneidrollengehäuse 203 ausgebildeten Achslagerräumen 312 angeordnet und befestigt. Zum Fixieren der Keillagerstücke 309 sind Widerlagerstücke 315 vorhanden, die sich auf der den Keillagerstücken 309 abgewandten Seite an dem Schneidrollengehäuse 203 abstützen.

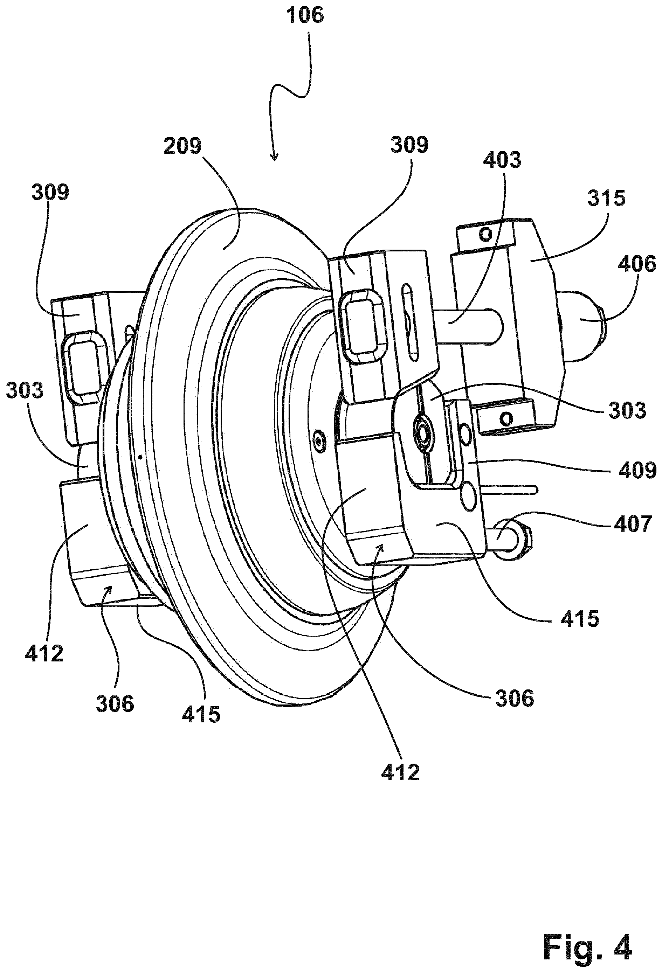

Fig. 4 zeigt in einer perspektivischen Ansicht die Schneidrolle 209 mit Schneidrollenhalterung gemäß Fig. 3 ohne das Schneidrollengehäuse 203. Aus Fig. 4 ist ersichtlich, dass jedes Keillagerstück 309 und jedes dem betreffenden Keillagerstück 309 zugeordnete Widerlagerstück 315 über einen Spannbolzen 403 miteinander verbunden sind, wobei der Spannbolzen 403 an dem Keillagerstück 309 in axialer Richtung fest angebracht ist und auf der dem Keillagerstück 309 abgewandten Seite des Widerlagerstücks 315 eine Spannschraubenkappe 406 mit einer darunterliegenden Spannmutter aufweist, so dass ein Anziehen der Spannmutter bei Anlage des betreffenden Widerlagerstücks 315 gegen das in Fig. 4 nicht dargestellte Schneidrollengehäuse 203 bewirkt, dass das Keillagerstück 309 zusammen mit dem C-Stück 306 sowie der Schneidrolle 209 spielfrei in dem Schneidrollengehäuse 203 fixiert ist. Eine Befestigungsschraube 407 ist mit der Messwange 409 des C-Stücks 306 verbunden und lässt sich hierüber an dem Schneidrollengehäuse 203 fixieren.

Weiterhin lässt sich der Darstellung gemäß Fig. 4 entnehmen, dass jedes C-Stück 306 über eine bei ordnungsgemäßer Verbauung in Vortriebsrichtung rückseitig liegende Messwange 409 und eine gegenüber der Messwange 409 kürzere Gegenwange 412 verfügt, die der Messwange 409 in Vortriebsrichtung vorderseitig gegenüber liegt. Zwischen der Messwange 409 und der Gegenwange 412 weist jedes C-Stück 306 einen Basisabschnitt 415 auf, so dass bei entsprechender formschlüssiger Ausgestaltung der Endabschnitte 303 der Schneidrollenachse die Schneidrollenachse verdrehfest in den C-Stücken 306 gehalten und durch die den Basisabschnitten 415 gegenüberliegenden Keillagerstücken 309 auch gegen ein Heraustreten aus den C-Stücken 306 gesichert ist.

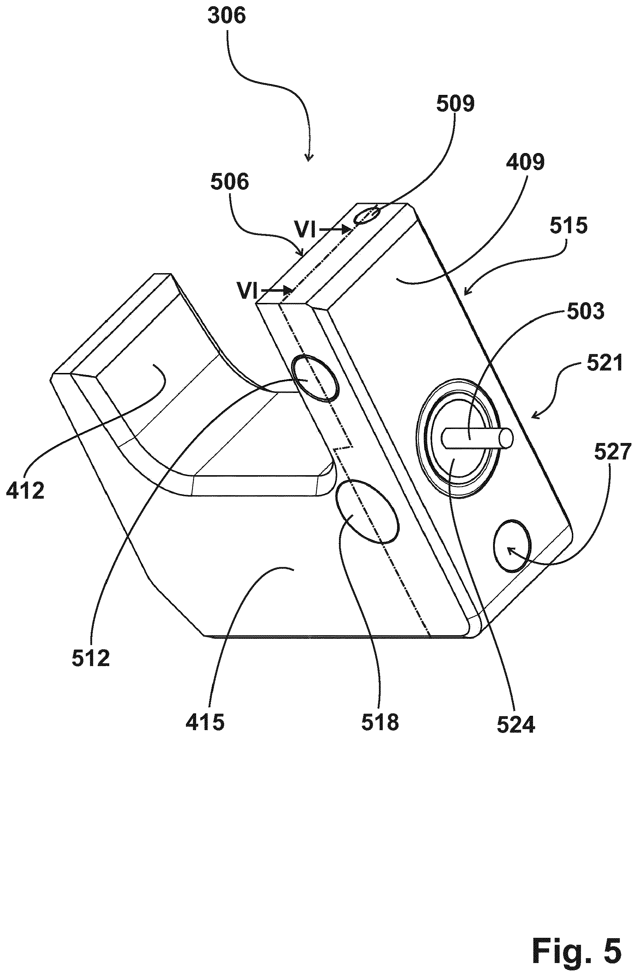

Fig. 5 zeigt in einer perspektivischen Ansicht ein Ausführungsbeispiel eines mit einem Anschlusskabel 503 ausgestatteten Schneidrollenlagerteils gemäß der Erfindung in Gestalt des bereits bei den Erläuterungen zu Fig. 3 und Fig. 4 genannten C-Stücks 306, wie es insbesondere bei einer Schneidrollenhalterung gemäß Fig. 2 bis Fig. 4 zweckmäßigerweise zum Einsatz kommt. Die Messwange 409 verfügt über eine der Gegenwange 412 zugewandte, plane Lastaufnahmefläche 506, an der bei bestimmungsgemäßer Anordnung ein Endabschnitt 303 der Schneidrollenachse einer Schneidrolle 209 anliegt und bei Vortrieb einer Tunnelvortriebsmaschine die auf die Schneidrolle 209 wirkende Kraft derart in das C-Stück 306 einleitet, dass bei auf die Schneidrolle 209 einwirkender Belastung auch die Messwange 409 messtechnisch nachweisbar elastisch verformt wird.

In der Messwange 409 ist, wie weiter unten näher erläutert, eine Aufnahmeraumanordnung ausgebildet, die ebenfalls weiter unten näher erläuterte Komponenten einer Lastmesseinheit aufnimmt. Zum Verschließen der Aufnahmeraumanordnung sind stirnseitig an dem freien Ende der Messwange 409 ein Überleitungskanalverschluss 509, an den beiden Seitenflächen der Messwange 409 ein in der Darstellung gemäß Fig. 5 dem Betrachter zugewandter erster Sensoraufnahmeraumverschluss 512 sowie ein in der Darstellung gemäß Fig. 5 dem Betrachter abgewandter, dem ersten Sensoraufnahmeraumverschluss 512 gegenüberliegender zweiter Sensoraufnahmeraumverschluss 515, ein in der Darstellung gemäß Fig. 5 dem Betrachter zugewandter Ankoppelraumverschluss 518, ein in der Darstellung gemäß Fig. 5 dem Betrachter abgewandter, dem Ankoppelraumverschluss 518 gegenüberliegender Elektronikaufnahmeraumverschluss 521 und an der der Gegenwange 412 abgewandten Rückseite der Messwange 409 ein Kabeldurchführverschluss 524 vorhanden.

Weiterhin ist bei dem Ausführungsbeispiel gemäß Fig. 5 an der der Gegenwange 412 abgewandten Rückseite der Messwange 409 ein Blindraum 527 vorhanden, der von der Aufnahmeraumanordnung getrennt und zum Verankern der Befestigungsschraube 407 eingerichtet ist.

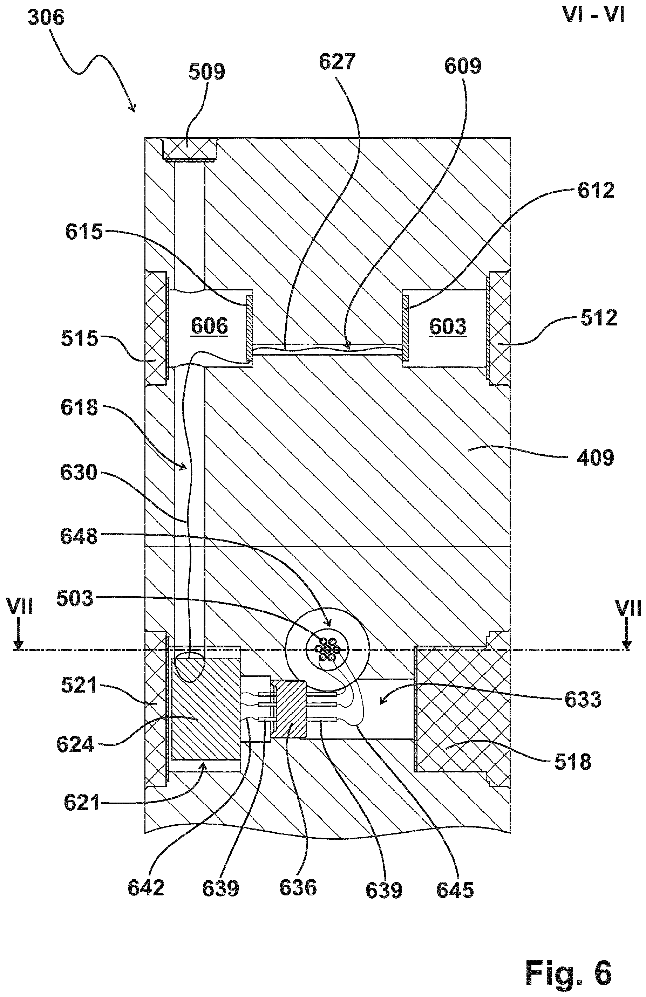

Fig. 6 zeigt in einer Schnittansicht das Ausführungsbeispiel eines Schneidrollenlagerteils in Gestalt des C-Stücks 306 gemäß Fig. 5 in einer gestuften ersten Schnittebene, in der Darstellung gemäß Fig. 5 mit VI-VI gekennzeichnet, die mit ihren Teilebenen parallel zu der Lastaufnahmefläche 506 ausgerichtet ist und in etwa in der Mitte der Messwange 409 liegt. Aus Fig. 6 ist ersichtlich, dass die Aufnahmeraumanordnung über einen ersten Sensoraufnahmeraum 603, der nach außen von dem ersten Sensoraufnahmeraumverschluss 512 verschlossen ist, und über einen zweiten Sensoraufnahmeraum 606 verfügt, der nach außen durch den zweiten Sensoraufnahmeraumverschluss 515 verschlossen ist. Zwischen den jeweils sich von außen aufeinander zu erstreckenden, sacklochartig mit einem Boden ausgebildeten Sensoraufnahmeräumen 603, 606 erstreckt sich ein Sensoraufnahmeraumverbindungskanal 609, der jeweils in den Boden eines Sensoraufnahmeraums 603, 606 mündet.

An dem Boden des ersten Sensoraufnahmeraums 603 ist ein erster Lastsensor 612 und an dem Boden des zweiten Sensoraufnahmeraums 606 ist ein zweiter Lastsensor 615 angebracht, wobei die Lastensensoren 612, 615 als Komponenten einer Lastmesseinheit jeweils nach Art einer Wheatstone'schen Vollbrückenschaltung ausgestalteten Dehnungsmessstreifenanordnung mit vier auf einer Dehnungsmessstreifenträgerfolie aufgebrachten Dehnungsmessstreifengittern ausgebildet sind. Durch diese Verschaltung ergibt sich ein verhältnismäßig großes, weitgehend dehnungsproportionales elektrisches Signal quer zur in Richtung des Basisabschnittes 415 liegenden Hauptdehnungsrichtung.

Die Aufnahmeraumanordnung verfügt weiterhin über einen Überleitungskanal 618, der sich mit einem Hauptabschnitt zwischen dem zweiten Sensoraufnahmeraum 606 und dem Elektronikaufnahmeraum 621 erstreckt, wobei sich ein dem Hauptabschnitt gegenüberliegender Nebenabschnitt von dem zweiten Sensoraufnahmeraum 606 weg in Richtung der Stirnseite des freien Endes der Messwange 409 erstreckt und nach außen durch den Überleitungskanalverschluss 509 verschlossen ist.

In dem Elektronikaufnahmeraum 621 ist als weitere Komponente der Lastmesseinheit eine Signalaufbereitungselektronik 624 angeordnet, die mit dem ersten Lastsensor 612 und dem zweiten Lastsensor 615 über Sensoranschlusskabel 627, 630, die in dem Hauptabschnitt des Überleitungskanals 618 und in dem Sensoraufnahmeraumverbindungskanal 609 verlaufen, elektrisch verbunden ist. Mit der Signalaufbereitungselektronik 624 sind die Ausgangssignale der Lastsensoren 612, 615 in einen digitalen Datenstrom umsetzbar.

Die Aufnahmeraumanordnung ist weiterhin mit einem Auskoppelraum 633 ausgebildet, der nach außen durch den Auskoppelraumverschluss 518 verschlossen ist. Auf der dem Auskoppelraumverschluss 518 gegenüberliegenden Seite grenzt der Auskoppelraum 633 an den Elektronikaufnahmeraum 621 an, wobei zwischen dem Elektronikaufnahmeraum 621 und dem Auskoppelraum 633 ein hermetisch, und dabei insbesondere gas-, dampf- und wasserdicht, abdichtender Abdichtkörper 636 vorhanden ist.

Der Abdichtkörper 636 ist aus einer außenseitigen Metallwandung, die mit der Wandung der Aufnahmeraumanordnung im Übergangsbereich zwischen dem Elektronikaufnahmeraum 621 und dem Auskoppelraum 633 verschweißt ist, mit einem innenliegenden Glaskorpus aufgebaut, durch den eine Anzahl von Anschlussstiften 639 als Durchgangsleitungen durchgeführt ist. Dadurch sind der Elektronikaufnahmeraum 621, der Überleitungskanal 618 und die Sensoraufnahmeräumen 603, 606 mit dem sich zwischen ihnen erstreckenden Sensoraufnahmeraumverbindungskanal 609 hermetisch, und dabei insbesondere gas-, dampf- und wasserdicht, von der Außenatmosphäre abgetrennt, wodurch sich eine genaue und langzeitstabile Funktionsweise der Lastsensoren 612, 615 sowie der Signalaufbereitungselektronik 624 ergibt.

Auf der dem Elektronikaufnahmeraum 621 zugewandten Seite sind die Anschlussstifte 639 über Lackdrähte 642 mit der Signalaufbereitungselektronik 624 verbunden, während auf der dem Auskoppelraum 633 zugewandten Seite die Anschlussstifte 639 ebenfalls über Lackdrähte 645 mit dem in einem sich rechtwinklig zu der Schnittebene gemäß Fig. 6 erstreckenden Anschlusskanal 648 der Aufnahmeraumanordnung liegenden mehradrigen Anschlusskabel 503 verbunden sind.

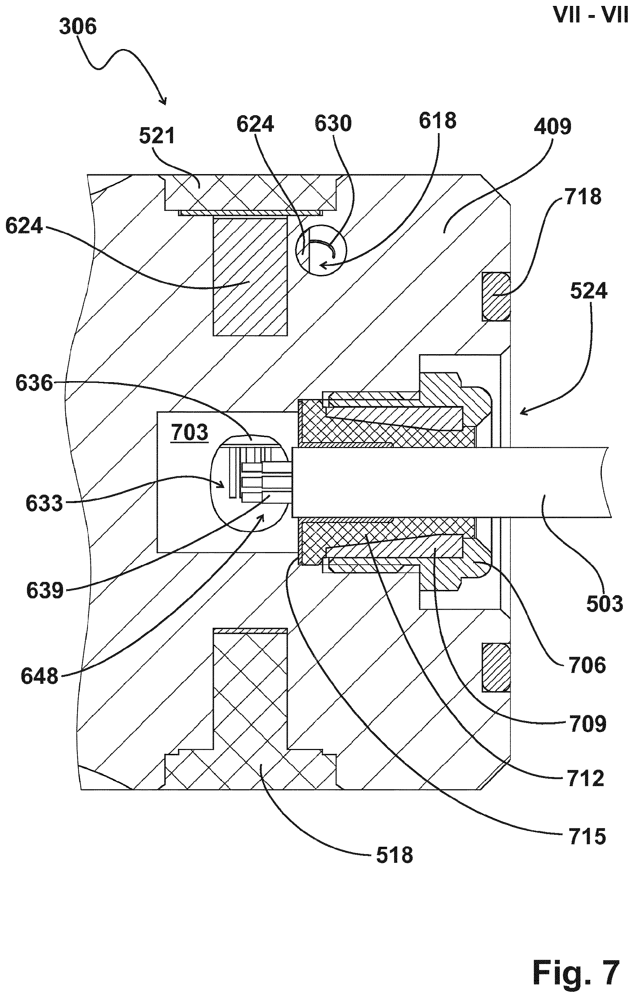

Fig. 7 zeigt in einer Schnittansicht das Ausführungsbeispiel eines Schneidrollenlagerteils in Gestalt des C-Stücks 306 gemäß Fig. 5 in einer in Fig. 6 mit VII-VII gekennzeichneten weiteren Schnittebene, die rechtwinklig zu der Schnittebene gemäß Fig. 6 und gegenüber der Mittelebene der Messwange 409 versetzt im Bereich des Kabeldurchführverschlusses 524 liegt. Aus Fig. 7 ist ersichtlich, dass der Anschlusskanal 648 auf seiner dem Auskoppelraum 633 abgewandten Seite in einen Anschlusskabelaufnahmeraum 703 der Aufnahmeraumanordnung mündet, der nach außen mit dem das Anschlusskabel 503 umschließenden und mechanisch in der Messwange 409 verankernden Kabeldurchführverschluss 524 in einem gewissen Umfang dampf- und wasserdicht verschlossen ist.

Der Kabeldurchführverschluss 524 ist beispielsweise ein an sich bekannter Verschluss mit einer außen liegenden und drehbar in der Messwange 409 gelagerten Hohlschraube 706, die eine sich nach axial innen aufweitende Konushülse 709 umgibt sowie die Konushülse 709 axial außenseitig mit einer nach radial innen einkragenden Schulter umgreift. Die Konushülse 709 wiederum liegt radial innenseitig an einer komplementär geformten Kegeldichtung 712 an, die axial endseitig gegen eine Führungshülse 715 anschlägt, die durch Anliegen an einer dem Anschlusskabelaufnahmeraum 703 vorgelagerten Ringstufe ein Verschieben des Kabeldurchführverschlusses 524 in den Anschlusskabelaufnahmeraum 703 blockiert. Beim Einschrauben der Hohlschraube 706 erfährt somit die Konushülse 709 eine axiale Bewegung nach innen in Richtung des Anschlusskabelaufnahmeraums 703, wodurch sich, bedingt durch den keilartigen Formschluss zwischen der Konushülse 709 und der Kegeldichtung 712, die Kegeldichtung 712 abdichtend an das Anschlusskabel 503 anpresst.

Weiterhin lässt sich der Darstellung gemäß Fig. 7 entnehmen, dass um den Kabeldurchführverschluss 524 herum ein O-Ring 718 in einer Nut angeordnet ist, um in verbauter Anordnung des C-Stücks 306 den Bereich um den Kabeldurchführverschluss 524 in einem gewissen Umfang schützend abzudichten.

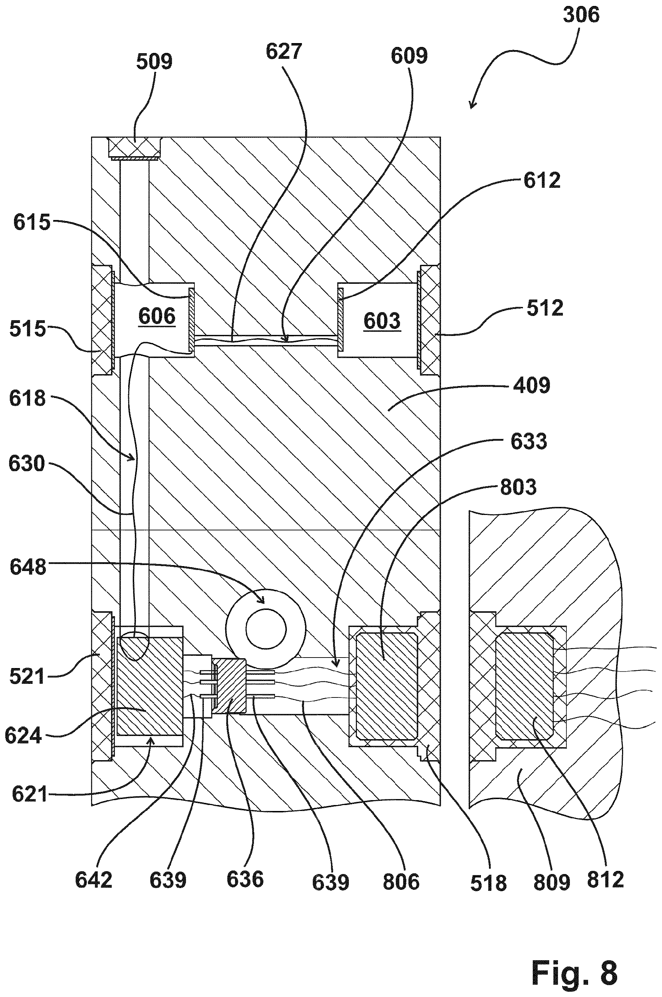

Fig. 8 zeigt in einer Schnittansicht entsprechend Fig. 6 ein weiteres Ausführungsbeispiel eines Schneidrollenlagerteils in Gestalt eines C-Stücks 306 gemäß Fig. 5, das mit einer induktiven Auskopplung ausgestattet, und bis auf das Anschlusskabel 503 sowie den Kabeldurchführverschluss 524 wie das anhand Fig. 6 und Fig. 7 erläuterte Ausführungsbeispiel eines Schneidrollenlagerteils ausgebildet ist. Daher sind in den Darstellungen gemäß Fig. 6, Fig. 7 und Fig. 8 einander entsprechende Elemente mit den gleichen Bezugszeichen versehen und im Weiteren nicht näher erläutert. Bei dem Ausführungsbeispiel gemäß Fig. 8 ist in den Auskoppelraumverschluss 518 eine erste Induktionskopplungseinheit 803 integriert, die über Lackdrähte 806 mit den auskoppelraumseitigen Anschlussstiften 639 des Abdichtkörpers 636 verbunden ist. Mit der ersten Induktionskopplungseinheit 803 ist die Signalaufbereitungselektronik 624 mit elektrischer Energie versorgbar. Weiterhin ist mit der ersten Induktionskopplungseinheit 803 der digitale Datenstrom aus der Signalaufbereitungselektronik 624 aus dem C-Stück 306 auskoppelbar.

Zum Aufnehmen des digitalen Datenstroms ist eine in einem Aufnahmekörper 809 integrierte zweite Induktionskopplungseinheit 812 vorhanden.

Es versteht sich, dass die Aufnahmeräume 603, 606, 621, 633, 648, 703 und der Überleitungskanal 618 der Aufnahmeraumanordnung gegenüber den anhand Fig. 6 bis Fig. 8 erläuterten Ausführungsbeispielen erfindungsgemäß auch spiegelverkehrt angeordnet sein können.

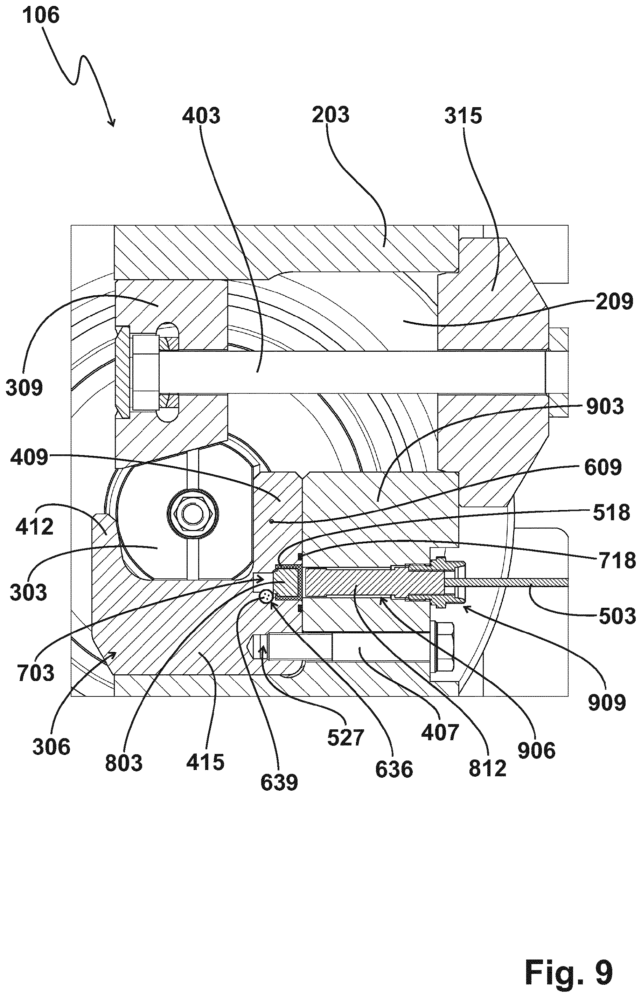

Fig. 9 zeigt in einer Schnittansicht ein Ausführungsbeispiel einer Schneidrollenhalterung mit einem C-Stück 306 als Schneidrollenlagerteil, das mit einer induktiven Auskopplung ausgestattet ist, wobei sich bei den voranstehend anhand Fig. 6 bis Fig. 8 erläuterten Ausführungsbeispielen und bei dem Ausführungsbeispiel gemäß Fig. 9 einander entsprechende Elemente mit den gleichen Bezugszeichen versehen und zum Vermeiden von Wiederholungen zum Teil nicht nochmals näher erläutert sind.

Bei dem Ausführungsbeispiel gemäß Fig. 9 ist das C-Stück 306 in Anlage an einen Widerlagersockel 903 des Schneidrollengehäuses 203 dargestellt, mit dem das C-Stück 306 mit der Befestigungsschraube 407 lösbar verbunden ist. In den Widerlagersockel 903 ist in einer der ersten Induktionskopplungseinheit 803 gegenüberliegenden, den Widerlagersockel 903 querenden Aufnahmeausnehmung 906 die zweite Induktionskopplungseinheit 812 angeordnet. Auf der dem C-Stück 306 gegenüberliegenden Seite des Widerlagersockels 903 ist die Aufnahmeausnehmung 906 mit einem hydraulischen Einschraubstutzen 909 versehen, durch den das bei diesem Ausführungsbeispiel mit der zweiten Induktionskopplungseinheit 812 verbundene Anschlusskabel 503 herausgeführt ist. Dieses Ausführungsbeispiel zeichnet sich durch eine mechanisch einfache sowie belastbare und elektrisch zuverlässige Verbindung des C-Stücks 306 mit dem Schneidrollengehäuse 203 aus.

## Patentansprüche

1. Schneidrollenlagerteil für eine Schneidrollenhalterung für ein Schneidrad (103) einer Tunnelvortriebsmaschine mit einer Lastmesseinheit und mit einer Aufnahmeraumanordnung, die zur Aufnahme der Lastmesseinheit eingerichtet ist, **dadurch gekennzeichnet, dass** die Lastmesseinheit als wenigstens einen Lastsensor (612, 615) eine Dehnungsmessstreifenanordnung aufweist, die an einem Boden wenigstens eines sacklochartig ausgebildeten Sensoraufnahmeraums (603, 606) der in dem Schneidrollenlagerteil (306) ausgebildeten Aufnahmeraumanordnung angeordnet ist, dass die Lastmesseinheit mit einer Signalaufbereitungselektronik (624) ausgestattet ist, die in einem Elektronikaufnahmeraum (621) der Aufnahmeraumanordnung angeordnet ist, dass die Aufnahmeraumanordnung einen Überleitungskanal (618) zum Verbinden des oder jedes Sensoraufnahmeraums (603, 606) mit dem Elektronikaufnahmeraum (621) aufweist, dass der oder jeder Sensoraufnahmeraum (603, 606), der Überleitungskanal (618) und der Elektronikaufnahmeraum (621) außenseitig des Schneidrollenlagerteils gegenüber der Außenatmosphäre hermetisch abgedichtet sind und dass der Elektronikaufnahmeraum (621) innenseitig des Schneidrollenlagerteils mit einem Durchgangsleitungen aufweisenden Abdichtkörper (636) hermetisch gegenüber der Außenatmosphäre abgedichtet ist.

2. Schneidrollenlagerteil nach Anspruch 1,
**dadurch gekennzeichnet, dass** die Lastmesseinheit zwei Lastsensoren (612, 615) aufweist, die jeweils in einem Sensoraufnahmeraum (603, 606) der Aufnahmeraumanordnung angeordnet sind, wobei die Sensoraufnahmeräumen (603, 606) über einen Sensoraufnahmeraumverbindungskanal (609) der Aufnahmeraumanordnung miteinander verbunden sind.

3. Schneidrollenlagerteil nach Anspruch 2,
**dadurch gekennzeichnet, dass** das Schneidrollenlagerteil als C-Stück (306) ausgebildet ist, das C-artig mit einer Messwange (409) und einer der Messwange (409) gegenüberliegenden, mit der Messwange (409) über einen Basisabschnitt (415) verbundenen Gegenwange (412) ausgebildet ist.

4. Schneidrollenlagerteil nach Anspruch 3,
**dadurch gekennzeichnet, dass** die Lastsensoren (612, 615) beidseitig einer Mittelebene der Messwange (409) angeordnet sind.

5. Schneidrollenlagerteil nach einem der Ansprüche 1 bis 4, **dadurch gekennzeichnet, dass** der Abdichtkörper (636) zwischen dem Elektronikaufnahmeraum (621) und einem Auskoppelraum (633) der Aufnahmeraumanordnung angeordnet ist, wobei der Abdichtkörper (636) mit einer Metallwandung und mit einem innenliegenden, die Durchgangsleitungen umschließenden Glaskorpus ausgebildet ist.

6. Schneidrollenlagerteil nach Anspruch 5,
**dadurch gekennzeichnet, dass** der Auskoppelraum (633) über einen Kabeldurchführverschluss (524) mit der Außenatmosphäre in Verbindung steht.

7. Schneidrollenlagerteil nach Anspruch 5,
**dadurch gekennzeichnet, dass** ein Auskoppelraum (633) außenseitig des Schneidrollenlagerteils mit einem Auskoppelraumverschluss (518), in den eine Induktionskopplungseinheit (803) integriert ist, gegenüber der Außenatmosphäre hermetisch abgedichtet ist.

8. Schneidrollenhalterung für ein Schneidrad (103) einer Tunnelvortriebsmaschine, die mit wenigstens einem Schneidrollenlagerteil (306) nach einem der Ansprüche 1 bis 7 ausgestattet ist.

9. Schneidrollenhalterung nach Anspruch 8, soweit mit einem Schneidrollenlagerteil (306) nach Anspruch 7 ausgestattet, **dadurch gekennzeichnet, dass** eine weitere Induktionskopplungseinheit (812) in einem Widerlagersockel (903) eines Schneidrollengehäuses (203), an dem das Schneidrollenlagerteil (306) angebracht ist, angeordnet ist.

10. Schneidrad für eine Tunnelvortriebsmaschine, die mit wenigstens einer Schneidrollenhalterung nach Anspruch 8 oder Anspruch 9 ausgestattet ist.

11. Tunnelvortriebsmaschine, die mit einem Schneidrad (103) nach Anspruch 10 ausgestattet ist.

## Claims

1. Cutting roller bearing part for a
cutting roller holder for a cutting wheel
(103) of a tunnel boring machine with a
load measuring unit and with a receiving space arrangement which is set up to receive the load measuring unit, **characterised in that** the load measuring unit has, as at least one load sensor (612, 615), a strain gauge arrangement which is arranged on a base of at least one sensor receiving space (603, 606), which is designed in the manner of a blind hole, of the receiving space arrangement formed in the cutting roller bearing part (306), **in that** the load measuring unit is equipped with signal processing electronics (624), which are arranged in an electronics receiving space (621) of the receiving space arrangement, **in that** the receiving space arrangement has a transfer channel (618) for connecting the or each sensor receiving space (603, 606) to the electronics receiving space (621), **in that** the or each sensor receiving space (603, 606), the transfer channel (618) and the electronics receiving space (621) are hermetically sealed against the external atmosphere on the outside of the cutting roller bearing part, and **in that** the electronics receiving space (621) is hermetically sealed against the external atmosphere on the inside of the cutting roller bearing part with a sealing body (636) having through-lines.

2. Cutting roller bearing part according to claim 1, **characterised in that** the load measuring unit has two load sensors (612, 615), which are each arranged in a sensor receiving space (603, 606) of the receiving space arrangement, wherein the sensor receiving spaces (603, 606) are connected to one another via a sensor receiving space connecting channel (609) of the receiving space arrangement.

3. Cutting roller bearing part according to claim 2, **characterised in that** the cutting roller bearing part is designed as a C-piece (306), which is designed in a C-like manner with a measuring side piece (409) and a counter side piece (412) lying opposite the measuring side piece (409) and connected to the measuring side piece (409) via a base section (415).

4. Cutting roller bearing part according to claim 3, **characterised in that** the load sensors (612, 615) are arranged on both sides of a center plane of the measuring side piece (409).

5. Cutting roller bearing part according to one of claims 1 to 4, **characterised in that** the sealing body (636) is arranged between the electronics receiving space (621) and a catcher space (633) of the receiving space arrangement, wherein the sealing body (636) is designed with a metal wall and with an internal glass body surrounding the through-lines.

6. Cutting roller bearing part according to claim 5, **characterised in that** the catcher space (633) is connected to the external atmosphere via a cable feedthrough closure (524).

7. Cutting roller bearing part according to claim 5, **characterised in that** a catcher space (633) on the outside of the cutting roller bearing part with a catcher space closure (518), in which an induction coupling unit (803) is integrated, is hermetically sealed against the external atmosphere.

8. Cutting roller holder for a cutting wheel (103) of a tunnel boring machine equipped with at least one cutting roller bearing part (306) according to one of claims 1 to 7.

9. Cutting roller holder according to claim 8, if equipped with a cutting roller bearing part (306) according to claim 7, **characterised in that** a further induction coupling unit (812) is arranged in an abutment base (903) of a cutting roller housing (203) on which the
cutting roller bearing part (306) is attached.

10. Cutting wheel for a tunnel boring machine equipped with at least one
cutting roller holder according to claim 8 or claim 9.

11. Tunnel boring machine equipped with a cutting wheel (103) according to claim 10.

## Revendications

1. Élément de palier à rouleaux de coupe destiné à un support de rouleau de coupe destiné à une roue de coupe (103) d'un tunnelier pourvu d'une unité de mesure de charge et pourvu d'un agencement d'espaces de réception qui est conçu pour recevoir l'unité de mesure de charge, **caractérisé en ce que** l'unité de mesure de charge comporte, en tant qu'au moins un capteur de charge (612, 615), un agencement de jauges de contrainte qui est disposé sur le fond d'au moins un espace de réception de capteur (603, 606) en forme de trou borgne de l'agencement d'espaces de réception formé dans l'élément de palier à rouleaux de coupe (306), **en ce que** l'unité de mesure de charge est équipée d'un système électronique de traitement de signal (624) qui est disposé dans un espace de réception de système électronique (621) de l'agencement d'espaces de réception, **en ce que** l'agencement d'espaces de réception comporte un canal de transfert (618) permettant de relier ledit ou chaque espace de réception de capteur (603, 606) à l'espace de réception de système électronique (621), **en ce que** ledit ou chaque espace de réception de capteur (603, 606), le canal de transfert (618) et l'espace de réception de système électronique (621) sont hermétiquement scellés à l'extérieur de l'élément de palier à rouleaux de coupe par rapport à l'atmosphère extérieure, et **en ce que** l'espace de réception de système électronique (621) est hermétiquement scellé à l'intérieur de l'élément de palier à rouleaux de coupe par rapport à l'atmosphère extérieure à l'aide d'un corps d'étanchéité (636) comportant des conduits de passage.

2. Élément de palier à rouleaux de coupe selon la revendication 1, **caractérisé en ce que** l'unité de mesure de charge comporte deux capteurs de charge (612, 615) qui sont chacun disposés dans un espace de réception de capteur (603, 606) de l'agencement d'espaces de réception, lesdits espaces de réception de capteur (603, 606) étant reliés les uns aux autres par un canal de liaison d'espaces de réception de capteur (609) de l'agencement d'espaces de réception.

3. Élément de palier à rouleaux de coupe selon la revendication 2, **caractérisé en ce que** l'élément de palier à rouleaux de coupe est conçu comme une pièce en C (306) qui présente la forme d'un C avec une joue de mesure (409) et une contre-joue (412) opposée à la joue de mesure (409) et reliée à la joue de mesure (409) par une partie de base (415).

4. Élément de palier à rouleaux de coupe selon la revendication 3, **caractérisé en ce que** les capteurs de charge (612, 615) sont disposés de part et d'autre d'un plan médian de la joue de mesure (409).

5. Élément de palier à rouleaux de coupe selon l'une des revendications 1 à 4, **caractérisé en ce que** le corps d'étanchéité (636) est disposé entre l'espace de réception de système électronique (621) et un espace de découplage (633) de l'agencement d'espaces de réception, ledit corps d'étanchéité (636) étant formé d'une paroi métallique et d'un corps en verre interne entourant les conduits de passage.

6. Élément de palier à rouleaux de coupe selon la revendication 5, **caractérisé en ce que** l'espace de découplage (633) est en communication avec l'atmosphère extérieure par l'intermédiaire d'un bouchon de passage de câble (524).

7. Élément de palier à rouleaux de coupe selon la revendication 5, **caractérisé en ce que** l'espace de découplage (633) à l'extérieur de l'élément de palier à rouleaux de coupe est hermétiquement fermé par rapport à l'atmosphère extérieure au moyen d'un bouchon d'espace de découplage (518) dans lequel est intégrée une unité de couplage par induction (803).

8. Support de rouleau de coupe destiné à une roue de coupe (103) d'un tunnelier qui est équipé d'au moins un élément de palier à rouleaux de coupe (306) selon l'une des revendications 1 à 7.

9. Support de rouleau de coupe selon la revendication 8, dans la mesure où il est équipé d'un élément de palier à rouleaux de coupe (306) selon la revendication 7, **caractérisé en ce qu'**une autre unité de couplage par induction (812) est disposée dans un socle de butée (903) d'un boîtier de rouleau de coupe (203) sur lequel est monté l'élément de palier à rouleaux de coupe (306).

10. Roue de coupe destinée à un tunnelier qui est équipé d'au moins un support de rouleau de coupe selon la revendication 8 ou la revendication 9.

11. Tunnelier qui est équipé d'une roue de coupe (103) selon la revendication 10.
